# EUROPÄISCHE PATENTSCHRIFT

(11) **EP 1 970 221 B1**
(45) Veröffentlichungstag und Bekanntmachung des Hinweises auf die Patenterteilung: **07.04.2010**
(21) Anmeldenummer: 08150543.0
(22) Anmeldetag: 23.01.2008
(51) Int. Cl.: B60C 17/00, B60C 5/14

(54) **Fahrzeugluftreifen mit Notlaufeigenschaften**
Vehicle pneumatic type with emergency operation characteristics
Pneus de véhicule dotés de propriétés d'urgence

(30) Priorität: 15.03.2007 DE 102007012401
(43) Veröffentlichungstag der Anmeldung: 17.09.2008
(73) Patentinhaber: Continental Reifen Deutschland GmbH, 30165 Hannover (DE)
(72) Erfinder: Joshi, Ujwal Raj, 31832 Springe (DE); Winkler, Jens, 30900 Wedemark (DE)
(74) Vertreter: Finger, Karsten

(56) Entgegenhaltungen:
- EP-A- 0 614 774
- EP-A- 1 375 200
- EP-A- 1 424 221
- EP-A- 1 428 691
- EP-A- 1 632 335
- JP-A- 4 090 902

## Beschreibung

Die Erfindung betrifft einen Fahrzeugluftreifen mit Notlaufeigenschaften, bestehend aus einem profilierten Laufstreifen, einem mehrlagigen Gürtelverband, einer luftdicht ausgeführten Innenschicht, einer Karkasse, die im Wulstbereich von axial innen nach axial außen um zugfeste Kerne und den Kernen aufsitzenden Kernprofilen als Karkasshochschlag herumgeführt ist und Seitenwänden, innerhalb derer mindestens ein im Querschnitt mondsichelförmiges, über den Umfang der Seitenwand ringförmig geschlossenes Verstärkungsprofil angeordnet ist (siehe zum Beispiel das Dokument EP-A-1 424 221).

Derartige, im Pannenfall selbstragende Fahrzeugluftreifen sind in verschiedenen Ausführungsformen hinreichend bekannt. Die im Bereich der Seitenwände des Reifens eingebrachten Verstärkungsprofile werden bezüglich ihrer Querschnittsform und ihrer elastomeren Mischungen derart ausgeführt, dass sie in der Lage sind, den Reifen bei einem Druckluftverlust im Pannenfall selbstragend zu erhalten, so dass eine Weiterfahrt über eine gewisse Laufstrecke ermöglicht ist. Bei Druckluftverlust wird die Selbsttragefähigkeit des Notlaufreifens dadurch erreicht, dass das in der Reifenseitenwand angeordnete Verstärkungsprofil auf Kompression beansprucht wird, während die an dem Verstärkungsprofil anliegende Karkasse auf Zug beansprucht wird. Durch dieses Zusammenwirken von Karkasse und Verstärkungsprofil wird der Reifen selbstragend und der Sitz des Wulstprofils auf der Felge bleibt erhalten. Diese Notlaufreifenkonstruktion ist als SSR-Reifen (Self Supporting RunFlat Tire) bekannt. Jedoch sind die auf das Verstärkungsprofil wirkenden Kräfte durch die Einfederung des Reifens, insbesondere aufgrund der Einfederung im Bereich der Bodenaufstandsfläche, enorm hoch. Bei den Notlaufreifen ist es daher oftmals problematisch, den Reifen im Notlauf über eine längere Fahrtstrecke selbstragend zu erhalten. Denn das Material des Verstärkungsprofils ermüdet im Notlauf nach einer gewissen Fahrtstrecke und bricht. Um einen vorzeitigen Ausfall im Notlaufbetrieb zu verhindern, werden bei Notlaufreifen oftmals zweilagige Karkasskonstruktionen und stark ausgelegte Inserts eingesetzt. Diese Maßnahmen erhöhen zwar die im Pannenlauf erhaltene Fahrtstrecke, verteuern aber den Reifen durch vermehrten Materialeinsatz und einen aufwendigeren Reifenaufbau.

Es ist die Aufgabe der vorliegenden Erfindung, einen Notlaufreifen bereitzustellen, der im normalen Fahrbetrieb gute Fahreigenschaften und ein geringes Gewicht aufweist, aber verglichen mit gattungsgemäßen Notlaufreifen kostengünstig in seiner Herstellung ist.

Die Aufgabe wird dadurch gelöst, dass die Innenschicht, im Querschnitt betrachtet, aus wenigstens zwei einander nicht berührenden Innenschichtabschnitten besteht und zwar derart, dass der zwischen den wenigstens zwei Abschnitten angeordnete innenschichtlose Bereich innerhalb der Querschnittshöhe eines Verstärkungsprofils liegt.

Erfindungswesentlich ist, dass die aus luftundurchlässigem Gummi hergestellte Innenschicht nicht durchgängig die innerste Lage des Fahrzeugluftreifens bildet, sondern in der Reifenquerschnittsbetrachtung zumindest innerhalb eines Bereiches der Querschnittshöhe des Verstärkungsprofils unterbrochen ausgeführt ist und dadurch ein durchgängiger Bereich besteht, der keine Innenschicht aufweist. Überraschenderweise hat es sich gezeigt, dass der Fahrzeugluftreifen dennoch im normalen Fahrbetrieb luftdicht ist. Üblicherweise ist die luftdicht ausgeführte Innenschicht aus Butadien-Kautschuk (BR-Kautschuk) hergestellt. Dieser Kautschuk ist in der Anschaffung und durch seine Verarbeitung besonders teuer. Indem nun die Innenschicht nicht mehr durchgängig aus BR-Kautschuk gefertigt ist, sondern es wenigstens einen Bereich gibt, in dem auf die Innenschicht verzichtet ist, ist der Reifen durch diese Materialeinsparung in seiner Herstellung erheblich im Preis vergünstigt. Zudem ist durch die Materialeinsparung ebenfalls am Gewicht des Reifens eingespart, was sich positiv auf die Fahreigenschaften und den Kraftstoffverbrauch des mit diesen Reifen ausgestatteten Kraftwagens auswirkt. Es hat sich gezeigt, dass das aus Gummi gefertigte Verstärkungsprofil ab einer axialen Breite von ca. 3mm gleichsam einer luftundurchlässigen Gummischicht wirkt, bei einer geringeren Breite als ca. 3 mm aber luftdurchlässig ist. Diese Werte können aber je nach Materialwahl des Verstärkungsprofils variieren.

Vorteilhaft ist es, wenn der innenschichtlose Bereich ringkreisförmig über den Umfang der Seitenwand geschlossen angeordnet ist der Ringkreis über den Umfang der Seitenwand die gleiche Breite aufweist. Somit ist eine gute Uniformity des Fahrzeugluftreifens gewahrt.

In einer vorteilhaften Ausführungsform besteht die Innenschicht, im Querschnitt betrachtet, aus drei einander nicht berührenden Innenschichtabschnitten und zwar derart, dass die zwischen den drei Abschnitten angeordneten zwei innenschichtlosen Bereiche innerhalb der Querschnittshöhe eines jeden der in beiden Seitenwänden angeordneten Verstärkungsprofile liegen. Es ist ein Notlaufreifen geschaffen, der innerhalb der Querschnittshöhe der Verstärkungsprofile beider Seiten je einen innenschichtlosen Bereich aufweist. Hierdurch sind Kosten an teurem Innenschichtgummimaterial und an Gewicht eingespart. Die Innenschicht ist wie üblich und bekannt angeordnet, ist aber im Bereich der Querschnittshöhen der in beiden Seitenwänden angeordneten Verstärkungsprofile ringkreisförmig über den Umfang der Seitenwand unterbrochen.

Zweckmäßig ist es, wenn der Endbereich des unterhalb des Crown-Bereichs angeordneten Innenschichtabschnittes das radial obere Ende des Verstärkungsprofils -im Querschnitt betrachtet- bis wenigstens zu derjenigen axialen Breite des Verstärkungsprofils überlappt, bei welcher das Verstärkungsprofil luftdicht ist/wirkt und die luftdichte Innenschicht ersetzen kann. Somit ist sichergestellt, dass durch das Überlappen der im Crown-Bereich angeordneten Innenschicht mit dem radial oben auslaufenden und sich materialverdünnenden Verstärkungsprofil die Luftdichtheit des Reifens gewährleistet ist.

Aus dem gleichen vorgenannten Grund ist es zweckmäßig, wenn der Endbereich des am Wulstbereich angeordneten Innenschichtabschnittes das radial untere Ende des Verstärkungsprofils bis wenigstens zu derjenigen axialen Breite des Verstärkungsprofils überlappt, bei welcher das Verstärkungsprofil luftdicht ist.

Der Grad der geringst notwenigen Überlappung hängt somit von der luftdichten Wirkung der gewählten Elastomermischung des Verstärkungsprofils ab. Sie kann bei einer bestimmten Butadien-Gummimischung eine axiale Breite des Verstärkungsprofils von ca. 2mm erfordern.

Weitere Merkmale, Vorteile und Einzelheiten der Erfindung werden anhand der Zeichnungen, die schematische Ausführungsbeispiele darstellen, näher erläutert. Es zeigen die:
- Fig.1: einen Teilquerschnitt durch einen SSR-Radialreifen für Personenkraftwagen;
- Fig.2: einen Teilquerschnitt durch einen anderen SSR-Radialreifen für Personenkraft- wagen.

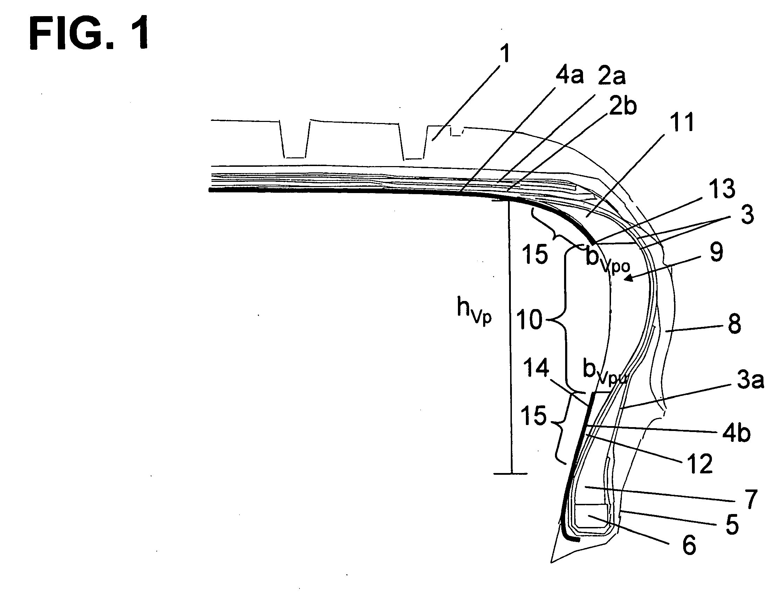

Gemäß dem in **Fig. 1** gezeigten Teilquerschnitt eines SSR-Radialreifens für Personenkraftwagen sind die wesentlichen Bestandteile, aus welchen sich der dargestellte Radialreifen zusammensetzt: ein profilierter Laufstreifen 1, ein bei der gezeigten Ausführung aus zwei Lagen 2a, 2b bestehender Gürtel 2, eine zweilagig ausgeführte Karkasse 3, eine luftdicht ausgeführte, mehrteilige Innenschicht 4a, 4b, Wülste 5 mit Wulstkernen 6 und Wulstkernprofilen 7, sowie Seitenwände 8 und etwa mondsichelförmige, aus elastomerem Material, insbesondere aus einer Kautschukmischung, hergestellte Verstärkungsprofile 9. Die beiden Lagen 2a des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 20° und 35° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von axial innen nach axial außen geführt, ihre Hochschläge 3a verlaufen neben den Wulstkernprofilen 7 in Richtung Gürtel 2. Die Dicke (axiale Breite) des Verstärkungsprofils 9 nimmt sowohl Richtung Gürtel 2 als auch Richtung Wulst 5 ab. Richtung Gürtel 2 reicht das Verstärkungsprofil 9 bis unter die Randbereiche desselben. Richtung Wulst 5 endet das Verstärkungsprofil 9 knapp oberhalb des Wulstkernes 6. Über den überwiegenden Bereich der Länge der Seitenwand ist das Verstärkungsprofil 9 nahezu konstant dick ausgeführt, seine Stärke beträgt 6 bis 154mm.

Erfindungswesentlich ist nun, dass in diesem Teilquerschnitt, der die rechte Querschnittshälfte eines im Querschnitt symmetrisch aufgebauten Radialluftreifens darstellt, die aus BR-Kautschuk bestehende Innenschicht 4 nicht durchgängig den Reifeninnenraum auskleidet. Sondern die Innenschicht 4 besteht aus zwei einander nicht berührenden Innenschichtabschnitten 4a, 4b und zwar derart, dass der zwischen den zwei Abschnitten 4a, 4b angeordnete innenschichtlose Bereich 10 innerhalb der Querschnittshöhe h_{Vp} des Verstärkungsprofils 9 liegt. Der Innenschichtabschnitt 4a ist unterhalb des Crown-Bereiches des Reifens angeordnet und liegt mit seinem rechten Ende 13 radial innen direkt auf dem oberen Ende des Verstärkungsprofils 11 in einem Überlappungsbereich 15 von Verstärkungsprofil und Innenschicht von ca. 10mm Länge auf. Ebenso liegt der Innenschichtabschnitt 4b des Wulstbereiches 5 mit seinem oberen Innenschichtabschnittende 14 am unteren Ende des Verstärkungsprofils 12 direkt auf dem Verstärkungsprofil 9 auf und bildet einen Überlappungsbereich 15 von ca. 10mm Länge. Der innenschichtlose Bereich 10, welcher innerhalb der Querschnittshöhe h_{Vp} des Verstärkungsprofils 9 angeordnet ist, ist ringkreisförmig über den Umfang der Reifenseitenwand geschlossen und ist aufgrund der axialen Breite (Dicke) des Verstärkungsprofils in Kombination mit der luftdichten Eigenschaft des gewählten Verstärkungsprofilmaterials luftdicht, so dass in diesem Bereich 10 auf die Innenschicht 4 verzichtet werden kann. Dieses spart teuren BR-Kautschuk ein, wodurch der Reifen in seiner Herstellung preislich vergünstigt ist und ebenfalls das Reifengewicht verringert ist.

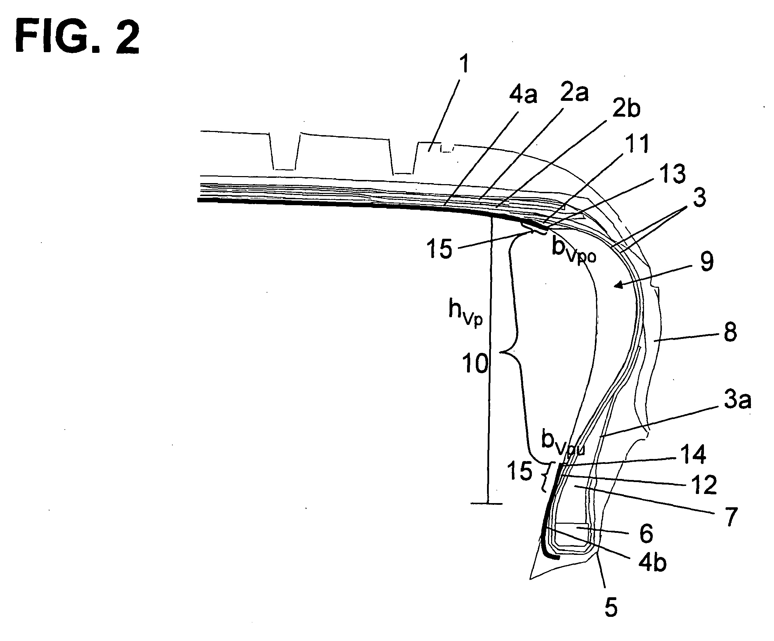

Die **Fig.2** zeigt einen anderen Teilquerschnitt eines SSR-Radialreifens für Personenkraftwagen. Gleiche Bauteile der in den Fig.1,2 dargestellten Reifen sind mit gleichen Bezugsziffern benannt. Der im Teilquerschnitt der Fig.2 dargestellte SSR-Reifen unterscheidet sich von dem SSR-Reifen der Fig.1 dadurch, dass der innenschichtlose Bereich 10 wesentlich breiter (höher) ist, nämlich über fast die gesamte Höhe h_{Vp} des Verstärkungsprofils 9 reicht. Das rechte Ende 13 des unterhalb des Crown-Bereichs angeordneten Innenschichtabschnitts 4a überlappt das obere Ende des Verstärkungsprofils 11 wesentlich weniger als in Fig.1 in einem Überlappungsbereich 15 von nur 4mm radialer Höhe. Das obere Ende 14 des unteren Innenschichtabschnitts 4b überlappt das untere Ende des Verstärkungsprofils 12 in einem Bereich 15 von 4mm radialer Höhe.

Der Überlappungsbereich 15 von Innenschicht 4a, 4b und Verstärkungsprofil 9 ist jedoch immer derart breit zu wählen, dass der Reifen luftdicht erhalten bleibt. Je nach Material des Verstärkungsprofils, welches unterschiedliche Eigenschaften in Bezug auf die Luftdichtigkeit aufweisen kann, sind die radialen Höhen (bzw. die axialen Breiten) der Überlappungsbereiche 15 zwischen Verstärkungsprofil 9 und Innenschicht 4a, 4b anzupassen. Wenn das Verstärkungsprofil 9 aus luftdichtem Material gefertigt ist, kann auf eine Überlappung der Innenschicht 4 mit den Verstärkungsprofilenden 11, 12 so gut wie ganz verzichtet werden.

### Bezugszeichenliste

### (Teil der Beschreibung)

- 1: Laufstreifen
- 2: Gürtel
- 2a,b: Gürtellage
- 3: Karkasse
- 3a: Karkasshochschlag
- 4: Innenschicht
- 5: Wulst
- 6: Wulstkern
- 7: Kernprofil
- 8: Seitenwand
- 9: Verstärkungsprofil
- 10: Bereich ohne Innenschicht
- 11: Radial oberes Endes des Verstärkungsprofils
- 12: Radial unteres Ende des Verstärkungsprofils
- 13: Innenschichtendbereich
- 14: Innenschichtendbereich
- 15: Überlappungsbereich
- h_{Vp}: Querschnittshöhe des Verstärkungsprofils
- b_{Vpo}: axiale Breite des Verstärkungsprofils-oben
- b_{Vpu}: axiale Breite des Verstärkungsprofils-unten

## Patentansprüche

1. Fahrzeugluftreifen mit Notlaufeigenschaften,
bestehend aus einem profilierten Laufstreifen (1), einem mehrlagigen Gürtelverband (2), einer luftdicht ausgeführten Innenschicht (4), einer Karkasse (3), die im Wulstbereich (5) von axial innen nach axial außen um zugfeste Kerne (6) und den Kernen aufsitzenden Kernprofilen (7) als Karkasshochschlag (3a) herumgeführt ist und Seitenwänden (8), innerhalb derer mindestens ein im Querschnitt mondsichelförmiges, über den Umfang der Seitenwand ringförmig geschlossenes Verstärkungsprofil (9) angeordnet ist,
**dadurch gekennzeichnet,**
**dass** die Innenschicht (4), im Querschnitt betrachtet, aus wenigstens zwei einander nicht berührenden Innenschichtabschnitten (4a, 4b) besteht und zwar derart, dass der zwischen den wenigstens zwei Abschnitten (4a, 4b) angeordnete innenschichtlose Bereich (10) innerhalb der Querschnittshöhe (h_{Vp}) eines Verstärkungsprofils (9) liegt.

2. Fahrzeugluftreifen nach Anspruch 1,
**dadurch gekennzeichnet,**
**dass** der innenschichtlose Bereich (10) ringkreisförmig über den Umfang der Seitenwand angeordnet ist.

3. Fahrzeugluftreifen nach einem oder mehreren der vorangehenden Ansprüche,
**dadurch gekennzeichnet,**
**dass** die Innenschicht (4), im Querschnitt betrachtet, aus drei einander nicht berührenden Innenschichtabschnitten besteht und zwar derart, dass die zwischen den drei Abschnitten angeordneten innenschichtlosen Bereiche (10) innerhalb der Querschnittshöhe (h_{Vp}) eines jeden der Verstärkungsprofile (9) liegen.

4. Fahrzeugluftreifen nach einem oder mehreren der vorangehenden Ansprüche,
**dadurch gekennzeichnet,**
**dass** der Endbereich (13) des unterhalb des Crown-Bereichs angeordneten Innenschichtabschnittes (4a) das radial obere Ende des Verstärkungsprofils (11) bis wenigstens zu derjenigen axialen Breite (b_{Vpo}) des Verstärkungsprofils (9) überlappt, bei welcher das Verstärkungsprofil (9) luftdicht ist.

5. Fahrzeugluftreifen nach einem oder mehreren der vorangehenden Ansprüche,
**dadurch gekennzeichnet,**
**dass** der obere Endbereich (14) des am Wulstbereich (5) angeordneten Innenschichtabschnittes (4b) das radial untere Ende des Verstärkungsprofils (12) bis wenigstens zu derjenigen axialen Breite (b_{Vpu}), bei welcher das Verstärkungsprofil (9) luftdicht ist.

## Claims

1. Pneumatic vehicle tyre with run-flat properties, comprising a profiled tread rubber (1), a multiply breaker belt assembly (2), an inner layer (4) of an airtight configuration, a carcass (3), which is wound around high-tensile strength cores (6) and bead fillers (7) on the cores in the bead region (5), axially from inside to outside as a carcass turn-up (3a), and sidewalls (8), within which there is at least one reinforcing profile (9) with a crescent-shaped cross section closed annularly over the circumference of the side wall, **characterized in that** the inner layer (4), viewed in cross section, comprises at least two inner layer portions (4a, 4b) not touching one another, to be precise in such a way that the region (10) without an inner layer that is arranged between the at least two portions (4a, 4b) lies within the cross-sectional height (h_{Vp}) of a reinforcing profile (9).

2. Pneumatic vehicle tyre according to Claim 1, **characterized in that** the region (10) without an inner layer is arranged over the circumference of the side wall.

3. Pneumatic vehicle tyre according to one or more of the preceding claims, **characterized in that** the inner layer (4), viewed in cross section, comprises three inner layer portions not touching one another, to be precise in such a way that the regions (10) without an inner layer that are arranged between the three portions lie within the cross-sectional height (h_{Vp}) of each of the reinforcing profiles (9).

4. Pneumatic vehicle tyre according to one or more of the preceding claims, **characterized in that** the end region (13) of the inner layer portion (4a) arranged under the crown region overlaps the radially upper end of the reinforcing profile (11) up to at least that axial width (b_{Vpo}) of the reinforcing profile (9) at which the reinforcing profile (9) is airtight.

5. Pneumatic vehicle tyre according to one or more of the preceding claims, **characterized in that** the upper end region (14) of the inner layer portion (4b) arranged at the bead region (5) overlaps the radially lower end of the reinforcing profile (12) up to at least that axial width (b_{Vpu}) of the reinforcing profile (9) at which the reinforcing profile (9) is airtight.

## Revendications

1. Bandage pneumatique pour roue de véhicule à propriétés de roulage de secours, constitué d'une bande de roulement profilée (1), d'un ensemble multicouche de ceinture (2), d'une couche intérieure (4) rendue étanche à l'air, d'une carcasse (3) qui dans la zone de bourrelet (5) est passée du côté axialement intérieur au côté axialement extérieur autour d'âmes (6) résistantes en traction et de profilés d'âme (7) reposant sur les âmes en formant un rabattement (3a) de la carcasse vers le haut, ainsi que de parois latérales (8) à l'intérieur desquelles au moins un profilé de renfort (9) à section transversale en croissant de lune et fermé en forme d'anneau est disposé sur la périphérie de la paroi latérale,
**caractérisé en ce que**
vue en coupe transversale, la couche intérieure (4) est constituée d'au moins deux parties (4a, 4b) de couche intérieure non en contact l'une avec l'autre et
**en ce que** la zone (10) sans couche intérieure disposée entre les deux ou plusieurs parties (4a, 4b) est située à l'intérieur de la hauteur (h_{Vp}) de la section transversale d'un profilé de renfort (9).

2. Bandage pneumatique pour roue de véhicule selon la revendication 1, **caractérisé en ce que** la zone (10) sans couche intérieure est disposée en forme d'anneau circulaire sur la périphérie de la paroi latérale.

3. Bandage pneumatique pour roue de véhicule selon l'une ou plusieurs des revendications précédentes, **caractérisé en ce que** vue en coupe transversale, la couche intérieure (4) est constituée de trois parties de couche intérieure non en contact les unes avec les autres et **en ce que** les zones (10) sans couche intérieure disposées entre les trois parties sont situées à l'intérieur de la hauteur (h_{Vp}) de la section transversale du profilé de renfort (9) respectif.

4. Bandage pneumatique pour roue de véhicule selon l'une ou plusieurs des revendications précédentes, **caractérisé en ce que** la zone d'extrémité (13) de la partie (4a) de couche intérieure disposée en dessous de la zone de couronne surmonte l'extrémité radialement supérieure du profilé de renfort (11) jusqu'au moins la largeur axiale (b_{Vpo}) du profilé de renfort (9) sur laquelle le profilé de renfort (9) est étanche à l'air.

5. Bandage pneumatique pour roue de véhicule selon l'une ou plusieurs des revendications précédentes, **caractérisé en ce que** la partie d'extrémité supérieure (14) de la partie (4b) de couche intérieure disposée dans la zone de bourrelet (5) recouvre l'extrémité radialement inférieure du profilé de renfort (12) jusqu'au moins la largeur axiale (b_{Vpu}) du profilé de renfort (9) sur laquelle le profilé de renfort (9) est étanche à l'air.
